# EUROPEAN PATENT APPLICATION

(11) **EP 2 365 360 A2**
(43) Date of publication of application: **14.09.2011**
(21) Application number: 11158629.3
(22) Date of filing: 01.06.2009
(51) Int. Cl.: G02B 1/04, A61L 12/08

(54) **Silicone Hydrogel Contact Lenses Displaying Reduced Protein Uptake**

(30) Priority: 02.06.2008 US 131526
(62) Divisional of application: 09759183.8
(71) Applicant: Johnson & Johnson Vision Care, Inc., Jacksonville, FL 32256 (US)
(72) Inventor: Pinsley, Jeremy, B., Jacksonville, FL 32207 (US); Adams, Jonathan, P., Jacksonville, FL 32257 (US); Khanolkar, Amit, Jacksonville, FL 32256 (US); Zanini, Diana, Jacksonville, FL 32277 (US); Fadli, Zohra, Jacksonville, FL 32217 (US); Clark, Michael, R., Jacksonville, FL 32256 (US); Turner, David, C., Jacksonville, FL 32223 (US); Ford, James, D., Orange Park, FL 32004 (US); Maggio, Thomas, L., Jacksonville, FL 32244 (US)
(74) Representative: Kirsch, Susan Edith

(57) **Abstract**

The present invention relates to silicone hydrogel contact lenses formed from a reactive mixture comprising at least one silicone containing compound and a protein uptake reducing amount of at least protein uptake reducing compound.

## Description

### FIELD OF THE INVENTION

This invention relates to silicone hydrogel contact lenses having reduced protein uptake, and methods for making such contact lenses.

### BACKGROUND OF THE INVENTION

It is well known that contact lenses can be used to improve vision. Hydrogel contact lenses are very popular today and are often more comfortable than contact lenses made of hard materials.

Contact lenses made from silicone hydrogels have been disclosed. However, some silicone hydrogel lenses uptake more proteins than conventional lenses. The amount of protein uptake for uncoated silicone hydrogel lenses also increases if aqueous extraction is attempted.

Some early disclosed methods used only water. However, these early processes used extremely long water leaching and/or high temperatures to extract undesirable components. Protein uptake for these lenses was not measured.

Processes for removing undesired impurities from silicone hydrogel lenses via leaching steps using alcohols have been disclosed. Extraction of silicone hydrogel contact lenses with alcohols generally reduces protein uptake compared to aqueously extracted lenses. The alcohols can sting the eye and must be completely removed from the contact lens. Special handling steps must be taken to dispose of the alcohols making the manufacturing process more expensive. Moreover, the use of organic solutions can present drawbacks, including, for example: safety hazards; increased risk of down time to a manufacturing line; high cost of release solution; and the health hazards associated with organic solvents.

Accordingly, the need for methods for reducing protein uptake in silicone hydrogel lenses other than alcohol extraction remains.

### SUMMARY OF THE INVENTION

The present invention relates to silicone hydrogel contact lenses formed from a reactive mixture comprising at least one silicone containing compound and a protein uptake reducing amount of at least one protein uptake reducing compound. The present invention further relates to a method for reducing protein deposition of a contact lens comprising curing a silicone hydrogel reaction mixture comprising at least one protein uptake reducing compound in protein uptake reducing amount.

### DETAILED DESCRIPTION OF THE INVENTION

It has been surprisingly found that protein uptake may be decreased in silicone hydrogel contact lenses by incorporating at least one protein uptake reducing compound in the reaction mixture from which the contact lens is made. Previously protein deposition on a contact lens has been reduced by coating the contact lens, or by subjecting the lenses to extraction with solvents, such as alcohols. However, coatings can be difficult to apply uniformly, and require additional manufacturing steps and equipment. Separate extraction steps also require additional equipment and the use of solvents which are expensive, and can require special handling. The present invention provides a simple way to substantially reduce protein deposition.

Protein uptake reducing compound are compounds which when included in or contacted with the reaction mixture slow the reaction rate of at least one component within the reaction mixture, and in some embodiments, reduce the reaction rate of the "faster reacting" components, providing more homogeneous reaction of the components. Classes of protein uptake reducing compounds include inhibitors (or radical scavengers), chain transfer agents, radical scavengers, controlled free radical initiators, combinations thereof and the like.

Free radical inhibitors are compounds that react rapidly with propagating radicals to produce stable radical species that terminate the chain. Classes of inhibitors include quinones, substituted phenols, secondary aromatic amines, lactones and nitro compounds. Specific examples of inhibitors include BHT, MEHQ, hydroxyamines, benzofuranone derivatives, molecular oxygen, vitamin E, nitric oxide/nitrogen dioxide mixtures (which form nitroxides in situ) mixtures and combinations thereof and the like. In one embodiment of the present invention the protein uptake reducing compound comprises at least one inhibitor.

Examples of classes of chain transfer agents include alkyl thiols, dithiocarboxylic acid esters, combinations thereof and the like. Examples of controlled free radical initiators include nitroxide mediated polymerization (NMP) (including those disclosed in The Chemistry of Radical Polymerization, 2nd ed. Moad and Solomon, pgs 472-479), atom-transfer radical polymerization (ATRP), including low molecular weight activated organic halides (including those disclosed in The Chemistry of Radical Polymerization, 2nd ed. Moad and Solomon, pgs 488-89 and 492-497), and reversible addition fragmentation (chain) transfer (RAFT) polymerization, including thiocarbonylthio agents (such as those disclosed at including those disclosed in The Chemistry of Radical Polymerization, 2nd ed. Moad and Solomon, pgs 508-514). In the case where controlled free radical initiators are used, they are used as part or all of the initiator system.

Protein, as used herein includes proteins commonly found in the eye, including the tear film. These proteins include both active and denatured proteins. Examples of proteins commonly found in the tear film include lysozyme, lactoferrin, lipocalin, glycoproteins, albumin, IgHC, IgLC, combinations thereof and the like. In some embodiments the uptake of denatured proteins is reduced. Some proteins, such as lysozyme and lactoferrin (in their active form), are believed to have a neutral or positive effect on contact lens wear. In some embodiments uptake of proteins other that lactoferrin and lysozyme, is reduced, in some embodiments to less than about 5 µg/lens. A "protein uptake reducing effective amount" is an amount of protein uptake reducing compound sufficient to reduce, by at least about 10%, uptake by a contact lens of at least one protein from a tear like fluid compared to a lens with less than said effective amount. In other embodiments the uptake of proteins other that lactoferrin and lysozyme, is reduced at least about 10% and in some embodiments at least about 20% compared to a lens without an intentionally added protein reducing compound. In other embodiments the uptake of all proteins is reduced at least about 10% and in some embodiments at least about 20% compared to a lens without an intentionally added protein reducing compound.

The protein uptake reducing compounds are included in amounts sufficient to provide the lens with a total protein uptake of less than about 15 µg/lens and in some embodiments of less than about 10 µg/lens. The amount of protein uptake reducing compound used or included will depend upon a number of factors including, the efficiency of the protein uptaking reducing compound, the ocular compatibility of the protein uptaking reducing compound and the concentration of other protein uptaking reducing compounds. The efficiency of the protein uptaking reducing compounds can impact both the lower and upper concentrations of the present invention. For example, when butylated hydroxytoluene (BHT) is the sole protein uptaking reducing compound used, BHT concentrations of less than about 600 ppm provide little reduction in protein uptake. However, at protein uptake reducing compound molar concentrations greater than the molar concentration of the initiator can prevent the desired level of curing from taking place. Accordingly, protein uptaking reducing compounds should be incorporated in the reaction mixture in amounts above about 600 ppm, but less than an amount that prevents full curing of the polymer or that causes the finished lens to cause ocular discomfort when placed on the eye of a contact lens wearer.

Also using BHT as an example, it is known that BHT can cause ocular discomfort when included in a contact lens in leachable concentrations above about 2000 ppm. Ocular discomfort includes feelings of burning or stinging upon insertion of the contact lens and can last anywhere from a few seconds to a few minutes. The amount of ocular discomfort caused by a component varies depending upon its chemical structure and leachable concentration in the final lens. When BHT is used as a protein uptake reducing compound in the present invention, it should be present in the final lens in concentrations below about 3000 ppm, and in some embodiments at about 2000 ppm or less, and in some embodiments less than about 1000 ppm.

The amount of protein uptake reducing compound present in the final lens will depend upon the concentration of protein uptake reducing compound in the components used, the amount of protein uptake reducing compound added to the reaction mixture and the extraction conditions which are used. When BHT is used as a protein uptake reducing compound in the present invention and alcohol extraction is used, the amounts of BHT present in the reaction mixture may range up to about 2 weight% of the reaction mixture and diluent, in some embodiments up to about 1 weight% and in other embodiments up to about 0.5 weight %. However, when aqueous extraction is used, the concentration of BHT in the reaction mixture is below about 5000 ppm, and in some embodiments about 3000 ppm or less, and in some embodiments less than about 1500 ppm.

Oxygen may also be used as part of the protein uptake reducing compound. The amount of oxygen in the reaction mixture may be measured using an oxygen analyzer, such as Jenco 9250 Oxygen analyzer. Suitable amounts of oxygen include those sufficient to reduce protein uptake, but insufficient to negatively impact lens quality or properties. Suitable amounts of dissolved oxygen in the reaction mixture include those between about 1 and about 6 ppm. Oxygen may be introduced by exposing the lens molds to oxygen prior to charging the reactive mixture to the molds. The molds may be exposed to oxygen levels of up to about 20% O₂, and in some embodiments from about 10 to about 20% O₂, for exposure times from one minute and in some embodiments from about 1 minute to about 10 minutes, and in other embodiments from about one minute to about 5 minutes. Suitable exposure times may vary from those disclosed herein depending upon the molding material selected. So, for molding materials which are more oxygen permeable than Zeonor, times less than 5 minutes may be desirable.

The reactive mixtures of the present invention comprise all components (reactive and non-reactive) for forming the contact lenses of the present invention. Reaction mixtures of the present invention comprise at least one silicone containing component, and may contain other known components including hydrophilic components, wetting agents, photoinitiators, cross-linkers, UV blocking agents, colorants, photochromic compounds, pharmaceutical and nutriceutical compounds, antimicrobial and antifungal compounds, tinting agents, release aids, diluents and the like.

The term components includes monomers, macromers and prepolymers. "Monomer" refers to lower molecular weight compounds that can be polymerized to higher molecular weight compounds, polymers, macromers, or prepolymers. The term "macromer" as used herein refers to a high molecular weight polymerizable compound. Prepolymers are partially polymerized monomers or monomers which are capable of further polymerization.

A "silicone-containing component" is one that contains at least one [-Si-O-] unit in a monomer, macromer or prepolymer. In one embodiment, the total Si and attached O are present in the silicone-containing component in an amount greater than about 20 weight percent, and in another embodiment greater than 30 weight percent of the total molecular weight of the silicone-containing component. Useful silicone-containing components comprise polymerizable functional groups such as acrylate, methacrylate, acrylamide, methacrylamide, vinyl, N-vinyl lactam, N-vinylamide, and styryl functional groups. Examples of silicone-containing components which are useful in this invention may be found in U.S. Pat. Nos. 3,808,178; 4,120,570; 4,136,250; 4,153,641; 4,740,533; 5,034,461 and 5,070,215, and EP080539. These references disclose many examples of olefinic silicone-containing components.

While almost any silicone containing component may be included, in one embodiment of the present invention where a modulus of less than about 120 psi is desired, the majority of the mass fraction of the silicone components used in the lens formulation should contain only one polymerizable functional group ("monofunctional silicone containing component"). In this embodiment, to insure the desired balance of oxygen transmissibility and modulus it is preferred that all components having more than one polymerizable functional group ("multifunctional components") make up no more than 10 mmol/100 g of the reactive components, and preferably no more than 7 mmol/100 g of the reactive components.

Suitable silicone-containing components include compounds of 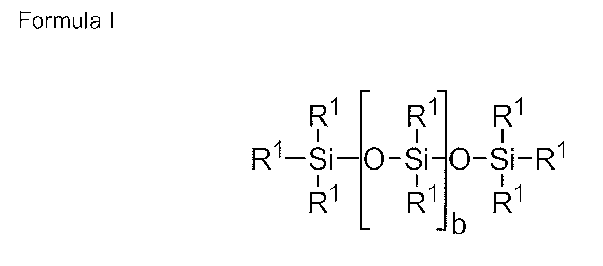 where R¹ is independently selected from monovalent reactive groups, monovalent alkyl groups, or monovalent aryl groups, any of the foregoing which may further comprise functionality selected from hydroxy, amino, oxa, carboxy, alkyl carboxy, alkoxy, amido, carbamate, carbonate, halogen or combinations thereof; and monovalent siloxane chains comprising 1-100 Si-O repeat units which may further comprise functionality selected from alkyl, hydroxy, amino, oxa, carboxy, alkyl carboxy, alkoxy, amido, carbamate, halogen or combinations thereof;
where b = 0 to 500, where it is understood that when b is other than 0, b is a distribution having a mode equal to a stated value;
wherein at least one R¹ comprises a monovalent reactive group, and in some embodiments between one and 3 R¹ comprise monovalent reactive groups.

As used herein "reactive groups" are groups that can undergo free radical and/or cationic polymerization. Non-limiting examples of free radical reactive groups include (meth)acrylates, styryls, vinyls, vinyl ethers, C₁₋₆alkyl(meth)acrylates, (meth)acrylamides, C₁₋₆alkyl(meth)acrylamides, N-vinyllactams, N-vinylamides, C₂₋₁₂alkenyls, C₂₋₁₂alkenylphenyls, C₂₋₁₂alkenylnaphthyls, C₂₋₆alkenylphenylC₁₋₆alkyls, O-vinylcarbamates and O-vinylcarbonates. Non-limiting examples of cationic reactive groups include vinyl ethers or epoxide groups and mixtures thereof. In one embodiment the free radical reactive groups comprises (meth)acrylate, acryloxy, (meth)acrylamide, and mixtures thereof.

Suitable monovalent alkyl and aryl groups include unsubstituted monovalent C₁ to C₁₆alkyl groups, C₆-C₁₄ aryl groups, such as substituted and unsubstituted methyl, ethyl, propyl, butyl, 2-hydroxypropyl, propoxypropyl, polyethyleneoxypropyl, combinations thereof and the like. In one embodiment b is zero, one R¹ is a monovalent reactive group, and at least 3 R¹ are selected from monovalent alkyl groups having one to 16 carbon atoms, and in another embodiment from monovalent alkyl groups having one to 6 carbon atoms. Non-limiting examples of silicone components of this embodiment include 2-methyl-,2-hydroxy-3-[3-[1,3,3,3-tetramethyl-1-[(trimethylsilyl)oxy]disiloxanyl]propoxy]propyl ester ("SiGMA"), 2-hydroxy-3-methacryloxypropyloxypropyl-tris(trimethylsiloxy)silane, 3-methacryloxypropyltris(trimethylsiloxy)silane ("TRIS"), 3-methacryloxypropylbis(trimethylsiloxy)methylsilane and 3-methacryloxypropylpentamethyl disiloxane.

In another embodiment, b is 2 to 20, 3 to 15 or in some embodiments 3 to 10; at least one terminal R¹ comprises a monovalent reactive group and the remaining R¹ are selected from monovalent alkyl groups having 1 to 16 carbon atoms, and in another embodiment from monovalent alkyl groups having 1 to 6 carbon atoms. In yet another embodiment, b is 3 to 15, one terminal R¹ comprises a monovalent reactive group, which may be further substituted with at least one hydrophilic group, such as hydroxyl, ether or a combination thereof, the other terminal R¹ comprises a monovalent alkyl group having 1 to 6 carbon atoms and the remaining R¹ comprise monovalent alkyl group having 1 to 3 carbon atoms. Non-limiting examples of silicone components of this embodiment include (mono-(2-hydroxy-3-methacryloxypropyl)-propyl ether terminated polydimethylsiloxane (400-1000 MW)) ("HO-mPDMS"), monomethacryloxypropyl terminated mono-n-butyl terminated polydimethylsiloxanes (800-1000 MW), ("mPDMS").

In another embodiment b is 5 to 400 or from 10 to 300, both terminal R¹ comprise monovalent reactive groups and the remaining R¹ are independently selected from monovalent alkyl groups having 1 to 18 carbon atoms which may have ether linkages between carbon atoms and may further comprise halogen.

In another embodiment, one to four R¹ comprises a vinyl carbonate or carbamate of the formula: 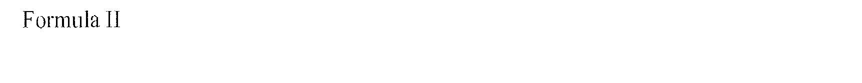 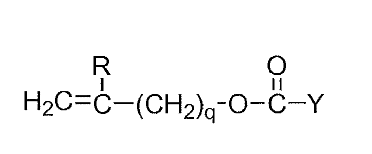 wherein: Y denotes O-, S- or NH-;
R denotes, hydrogen or methyl; q is 1, 2, 3 or 4; and b is 1 - 50.
The silicone-containing vinyl carbonate or vinyl carbamate monomers specifically include: 1,3-bis[4-(vinyloxycarbonyloxy)but-1-yl]tetramethyldisiloxane; 3-(vinyloxycarbonylthio) propyl-[tris (trimethylsiloxy)silane]; 3-[tris(trimethylsiloxy)silyl] propyl allyl carbamate; 3-[tris(trimethylsiloxy)silyl] propyl vinyl carbamate; trimethylsilylethyl vinyl carbonate; trimethylsilylmethyl vinyl carbonate, and 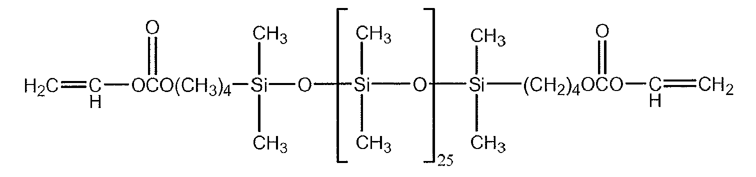 Where biomedical devices with modulus below about 200 are desired, only one R¹ shall comprise a monovalent reactive group and no more than two of the remaining R¹ groups will comprise monovalent siloxane groups.

In one embodiment, where a silicone hydrogel lens is desired, the lens of the present invention will be made from a reactive mixture comprising at least about 20 weight % and in some embodiments between about 20 and 70%wt silicone-containing components based on total weight of reactive monomer components from which the polymer is made. Another class of silicone-containing components includes polyurethane macromers of the following formulae:
Formulae IV-VI
(*D*A*D*G)*ₐ* *D*D*E¹;
E(*D*G*D*A)*ₐ* *D*G*D*E¹ or;
E(*D*A*D*G)*ₐ* *D*A*D*E¹
wherein:
D denotes an alkyl diradical, an alkyl cycloalkyl diradical, a cycloalkyl diradical, an aryl diradical or an alkylaryl diradical having 6 to 30 carbon atoms,
G denotes an alkyl diradical, a cycloalkyl diradical, an alkyl cycloalkyl diradical, an aryl diradical or an alkylaryl diradical having 1 to 40 carbon atoms and which may contain ether, thio or amine linkages in the main chain;
* denotes a urethane or ureido linkage;
*ₐ* is at least 1;
A denotes a divalent polymeric radical of formula: 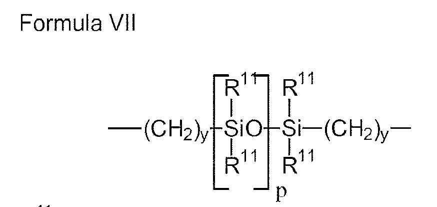
R¹¹ independently denotes an alkyl or fluoro-substituted alkyl group having 1 to 10 carbon atoms which may contain ether linkages between carbon atoms; y is at least 1; and p provides a moiety weight of 400 to 10,000; each of E and E¹ independently denotes a polymerizable unsaturated organic radical represented by formula: 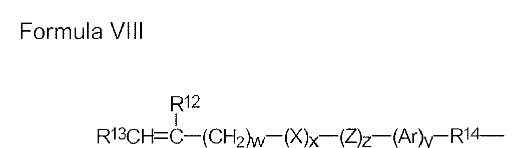 wherein: R¹² is hydrogen or methyl; R¹³ is hydrogen, an alkyl radical having 1 to 6 carbon atoms, or a -CO-Y-R¹⁵ radical wherein Y is -O-,Y-S-or —NH—; R¹⁴ is a divalent radical having 1 to 12 carbon atoms; X denotes -CO- or -OCO-; Z denotes —O— or —NH—; Ar denotes an aromatic radical having 6 to 30 carbon atoms; w is 0 to 6; x is 0 or 1; y is 0 or 1; and z is 0 or 1.

In one embodiment the silicone-containing component comprises a polyurethane macromer represented by the following formula: 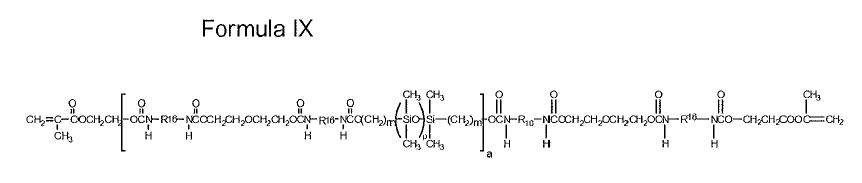 wherein R¹⁶ is a diradical of a diisocyanate after removal of the isocyanate group, such as the diradical of isophorone diisocyanate. Another suitable silicone containing macromer is compound of formula X (in which x + y is a number in the range of 10 to 30) formed by the reaction of fluoroether, hydroxy-terminated polydimethylsiloxane, isophorone diisocyanate and isocyanatoethylmethacrylate. 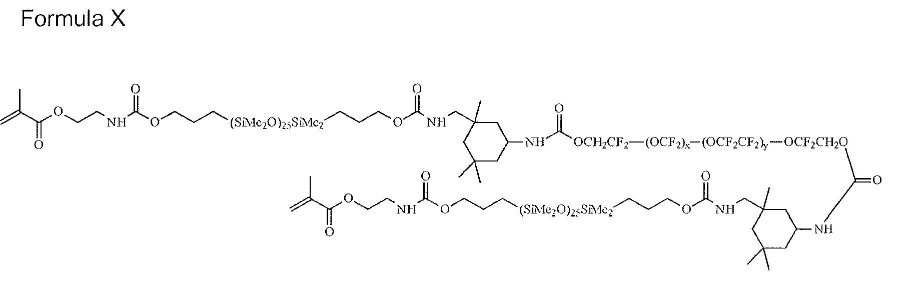 Other silicone-containing components suitable for use in this invention include those described is WO 96/31792 such as macromers containing polysiloxane, polyalkylene ether, diisocyanate, polyfluorinated hydrocarbon, polyfluorinated ether and polysaccharide groups. Another class of suitable silicone-containing components include silicone containing macromers made via GTP, such as those disclosed in U.S. Pat Nos. 5,314,960, 5,331,067, 5,244,981, 5,371,147 and 6,367,929. U.S. Pat. Nos. 5,321,108; 5,387,662 and 5,539,016 describe polysiloxanes with a polar fluorinated graft or side group having a hydrogen atom attached to a terminal difluoro-substituted carbon atom. US 2002/0016383 describe hydrophilic siloxanyl methacrylates containing ether and siloxanyl linkanges and crosslinkable monomers containing polyether and polysiloxanyl groups. Any of the foregoing polysiloxanes can also be used as the silicone-containing component in this invention.

The reactive mixture may also comprise at least one hydrophilic component. Hydrophilic monomers can be any of the hydrophilic monomers known to be useful to make hydrogels.

One class of suitable hydrophilic monomers include acrylic- or vinyl-containing monomers. Such hydrophilic monomers may themselves be used as crosslinking agents, however, where hydrophilic monomers having more than one polymerizable functional group are used, their concentration should be limited as discussed above to provide a contact lens having the desired modulus. The term "vinyl-type" or "vinyl-containing" monomers refer to monomers containing the vinyl grouping (-CH=CH₂) and are generally highly reactive. Such hydrophilic vinyl-containing monomers are known to polymerize relatively easily.

"Acrylic-type" or "acrylic-containing" monomers are those monomers containing the acrylic group: (CH₂=CRCOX) wherein R is H or CH₃, and X is O or N, which are also known to polymerize readily, such as N,N-dimethyl acrylamide (DMA), 2-hydroxyethyl methacrylate (HEMA), glycerol methacrylate, 2-hydroxyethyl methacrylamide, polyethyleneglycol monomethacrylate, methacrylic acid and acrylic acid.

Hydrophilic vinyl-containing monomers which may be incorporated into the silicone hydrogels of the present invention include monomers such as N-vinyl amides, N-vinyl lactams (e.g. NVP), N-vinyl-N-methyl acetamide, N-vinyl-N-ethyl acetamide, N-vinyl-N-ethyl formamide, N-vinyl formamide, with NVP being preferred.

Other hydrophilic monomers that can be employed in the invention include polyoxyethylene polyols having one or more of the terminal hydroxyl groups replaced with a functional group containing a polymerizable double bond. Examples include polyethylene glycol, ethoxylated alkyl glucoside, and ethoxylated bisphenol A reacted with one or more molar equivalents of an end-capping group such as isocyanatoethyl methacrylate ("IEM"), methacrylic anhydride, methacryloyl chloride, vinylbenzoyl chloride, or the like, to produce a polyethylene polyol having one or more terminal polymerizable olefinic groups bonded to the polyethylene polyol through linking moieties such as carbamate or ester groups.

Still further examples are the hydrophilic vinyl carbonate or vinyl carbamate monomers disclosed in U.S. Patents No. 5,070,215, and the hydrophilic oxazolone monomers disclosed in U.S. Patents No. 4,910,277. Other suitable hydrophilic monomers will be apparent to one skilled in the art.

In one embodiment the hydrophilic comprises at least one hydrophilic monomer such as DMA, HEMA, glycerol methacrylate, 2-hydroxyethyl methacrylamide, NVP, N-vinyl-N-methyl acrylamide, polyethyleneglycol monomethacrylate, methacrylic acid and acrylic acid with DMA being the most preferred.

The hydrophilic monomers may be present in a wide range of amounts, depending upon the specific balance of properties desired. Amounts of hydrophilic monomer up to about 50 and preferably between about 5 and about 50 weight %, based upon all reactive components are acceptable. For example, in one embodiment lenses of the present invention comprise a water content of at least about 25%, and in another embodiment between about 30 and about 70%. For these embodiments, the hydrophilic monomer may be included in amounts between about 20 and about 50 weight %.

Other components that can be present in the reaction mixture used to form the contact lenses of this invention include wetting agents, such as those disclosed in US 6,367,929, WO03/22321, WO03/22322, compatibilizing components, such as those disclosed in US2003/162,862 and US2003/2003/125,498, ultra-violet absorbing compounds, medicinal agents, antimicrobial compounds, copolymerizable and nonpolymerizable dyes, release agents, reactive tints, pigments, combinations thereof and the like.

A polymerization catalyst may be included in the reaction mixture. The polymerization initiators includes compounds such as lauryl peroxide, benzoyl peroxide, isopropyl percarbonate, azobisisobutyronitrile, and the like, that generate free radicals at moderately elevated temperatures, and photoinitiator systems such as aromatic alpha-hydroxy ketones, alkoxyoxybenzoins, acetophenones, acylphosphine oxides, bisacylphosphine oxides, and a tertiary amine plus a diketone, mixtures thereof and the like. Illustrative examples of photoinitiators are 1-hydroxycyclohexyl phenyl ketone, 2-hydroxy-2-methyl-1-phenyl-propan-1-one, bis(2,6-dimethoxybenzoyl)-2,4-4-trimethylpentyl phosphine oxide (DMBAPO), bis(2,4,6-trimethylbenzoyl)-phenyl phosphineoxide (Irgacure 819), 2,4,6-trimethylbenzyldiphenyl phosphine oxide and 2,4,6-trimethylbenzoyl diphenylphosphine oxide, benzoin methyl ester and a combination of camphorquinone and ethyl 4-(N,N-dimethylamino)benzoate. Commercially available visible light initiator systems include Irgacure 819, Irgacure 1700, Irgacure 1800, Irgacure 819, Irgacure 1850 (all from Ciba Specialty Chemicals) and Lucirin TPO initiator (available from BASF). Commercially available UV photoinitiators include Darocur 1173 and Darocur 2959 (Ciba Specialty Chemicals). These and other photoinitators which may be used are disclosed in Volume III, Photoinitiators for Free Radical Cationic & Anionic Photopolymerization, 2nd Edition by J.V. Crivello& K. Dietliker; edited by G. Bradley; John Wiley and Sons; New York; 1998. The initiator is used in the reaction mixture in effective amounts to initiate photopolymerization of the reaction mixture, e.g., from about 0.1 to about 2 parts by weight per 100 parts of reactive monomer. Polymerization of the reaction mixture can be initiated using the appropriate choice of heat or visible or ultraviolet light or other means depending on the polymerization initiator used. Alternatively, initiation can be conducted without a photoinitiator using, for example, e-beam. However, when a photoinitiator is used, the preferred initiators are bisacylphosphine oxides, such as bis(2,4,6-trimethylbenzoyl)-phenyl phosphine oxide (Irgacure 819®) or a combination of 1-hydroxycyclohexyl phenyl ketone and bis(2,6-dimethoxybenzoyl)-2,4-4-trimethylpentyl phosphine oxide (DMBAPO), and in another embodiment the method of polymerization initiation is via visible light activation. A preferred initiator is bis(2,4,6-trimethylbenzoyl)-phenyl phosphine oxide (Irgacure 819®).

The reactive components (silicone containing component, hydrophilic monomers, wetting agents, and other components which are reacted to form the lens) are mixed together either with or without a diluent to form the reaction mixture.

In one embodiment a diluent is used having a polarity sufficiently low to solubilize the non-polar components in the reactive mixture at reaction conditions. One way to characterize the polarity of the diluents of the present invention is via the Hansen solubility parameter, δp. In certain embodiments, the δp is less than about 10, and preferably less than about 6. Suitable diluents are further disclosed in US Ser. No 60/452898 and US 6,020,445.

Classes of suitable diluents include, without limitation, alcohols having 2 to 20 carbons, amides having 10 to 20 carbon atoms derived from primary amines, ethers, polyethers, ketones having 3 to 10 carbon atoms, and carboxylic acids having 8 to 20 carbon atoms. For all solvents, as the number of carbons increase, the number of polar moieties may also be increased to provide the desired level of water miscibility. In some embodiments, primary and tertiary alcohols are preferred. Preferred classes include alcohols having 4 to 20 carbons and carboxylic acids having 10 to 20 carbon atoms.

In one embodiment the diluents are selected from diluents that have some degree of solubility in water. In some embodiments at least about three percent of the diluent is miscible water. Examples of water soluble diluents include 1-octanol, 1-pentanol, 1-hexanol, 2-hexanol, 2-octanol, 3-methyl-3-pentanol, 2-pentanol, t-amyl alcohol, tert-butanol, 2-butanol, 1-butanol, 2-methyl-2-pentanol, 2-ethyl-1-butanol, ethanol, 3,3-dimethyl-2-butanol, decanoic acid, octanoic acid, dodecanoic acid, 1-ethoxy-2-propanol, 1-tert-butoxy-2-propanol, EH-5 (commercially available from Ethox Chemicals), 2,3,6,7-tetrahydroxy-2,3,6,7-tetramethyl octane, 9-(1-methylethyl)-2,5,8,10,13,16-hexaoxaheptadecane, 3,5,7,9,11,13-hexamethoxy-1-tetradecanol, mixtures thereof and the like.

The reactive mixture of the present invention may be cured via any known process for molding the reaction mixture in the production of contact lenses, including spincasting and static casting. Spincasting methods are disclosed in U.S. Patents Nos. 3,408,429 and 3,660,545, and static casting methods are disclosed in U.S. Patents Nos. 4,113,224 and 4,197,266. In one embodiment, the contact lenses of this invention are formed by the direct molding of the silicone hydrogels, which is economical, and enables precise control over the final shape of the hydrated lens. For this method, the reaction mixture is placed in a mold having the shape of the final desired silicone hydrogel, i.e. water-swollen polymer, and the reaction mixture is subjected to conditions whereby the monomers polymerize, to thereby produce a polymer in the approximate shape of the final desired product.

After curing the lens is subjected to extraction to remove unreacted components and release the lens from the lens mold. The extraction may be done using conventional extraction fluids, such organic solvents, such as alcohols or may be extracted using aqueous solutions.

Aqueous solutions are solutions which comprise water. In one embodiment the aqueous solutions of the present invention comprise at least about 30 % water, in some embodiments at least about 50% water, in some embodiments at least about 70% water and in others at least about 90 weight% water. Aqueous solutions may also include additional water soluble components such as release agents, wetting agents, slip agents, pharmaceutical and nutraceutical components, combinations thereof and the like. Release agents are compounds or mixtures of compounds which, when combined with water, decrease the time required to release a contact lens from a mold, as compared to the time required to release such a lens using an aqueous solution that does not comprise the release agent. In one embodiment the aqueous solutions comprise less than about 10 weight %, and in others less than about 5 weight % organic solvents such as isopropyl alcohol, and in another embodiment are free from organic solvents. In these embodiments the aqueous solutions do not require special handling, such as purification, recycling or special disposal procedures.

In various embodiments, extraction can be accomplished, for example, via immersion of the lens in an aqueous solution or exposing the lens to a flow of an aqueous solution. In various embodiments, extraction can also include, for example, one or more of: heating the aqueous solution; stirring the aqueous solution; increasing the level of release aid in the aqueous solution to a level sufficient to cause release of the lens; mechanical or ultrasonic agitation of the lens; and incorporating at least one leach aid in the aqueous solution to a level sufficient to facilitate adequate removal of unreacted components from the lens.

Extraction may be conducted by various implementations, such as but not limited to a batch process wherein lenses are submerged in a solution contained in a fixed tank for a specified period of time or in a vertical process where lenses are exposed to a continuous flow of an aqueous solution.

In some embodiments the aqueous solution can be heated with a heat exchanger or other heating apparatus to further facilitate leaching of the lens and release of the lens from a mold part. For example, heating can include raising the temperature of an aqueous solution to the boiling point while a hydrogel lens and mold part to which the lens is adhered are submerged in the heated aqueous solution. Other embodiments can include controlled cycling of the temperature of the aqueous solution.

Some embodiments can also include the application of physical agitation to facilitate leach and release. For example, the lens mold part to which a lens is adhered, can be vibrated or caused to move back and forth within an aqueous solution. Other embodiments may include ultrasonic waves through the aqueous solution.

These and other similar processes can provide an acceptable means of releasing the lens.

As used herein, "released from a mold" means that a lens is either completely separated from the mold, or is only loosely attached so that it can be removed with mild agitation or pushed off with a swab. In the process of the present invention the conditions used include temperature less than 99°C for less than about 1 hour.

It has been surprisingly found that the inclusion of at least one protein reducing compound also improves the lenses' ability to release from the mold when using aqueous extraction. Lenses formed from reaction mixtures comprising at least one protein reducing compound release more readily from the front curve mold, and display fewer edge related defects such as edge tears or chips. In some embodiments, reductions in edge related defects of at least about 20% are achieved. In some embodiments, to reduce edge related defects, at least one protein reducing compound is added to the reaction mixture, in combination with exposing the lens molds to oxygen before depositing the back curve onto the front curve containing the reaction mixture. The types and amounts of protein reducing compounds are as described above. Suitable exposure times are also disclosed above.

The lenses of the present invention require minimal post treatment. Post treatment is an optional part of treatment and includes solution exchange and extraction but not sterilization, storage and equilibration. In embodiments where post treatment is included, the post treatment is conducted with aqueous solutions for times less than about 6 hours, in some embodiments less than about 4 hours, less than about 2 hours and sometimes less than about 1 hour.

The treated lenses may be sterilized by known means such as, but not limited to autoclaving.

It will be appreciated that all of the tests specified herein have a certain amount of inherent test error. Accordingly, results reported herein are not to be taken as absolute numbers, but numerical ranges based upon the precision of the particular test.

In order to illustrate the invention the following examples are included. These examples do not limit the invention. They are meant only to suggest a method of practicing the invention. Those knowledgeable in contact lenses as well as other specialties may find other methods of practicing the invention. However, those methods are deemed to be within the scope of this invention.

### EXAMPLES

The following abbreviations are used in the examples below:

| | |
|---|---|
| SiGMA | 2-propenoic acid, 2-methyl-,2-hydroxy-3-[3-[1,3,3,3-tetramethyl-1-[(trimethylsilyl)oxy]disiloxanyl]propoxy]propyl ester |
| DMA | N,N-dimethylacrylamide |
| HEMA | 2-hydroxyethyl methacrylate |
| mPDMS | 800-1000 MW (Mₙ) monomethacryloxypropyl terminated mono-n-butyl terminated polydimethylsiloxane |
| Norbloc | 2-(2'-hydroxy-5-methacrylyloxyethylphenyl)-2H-benzotriazole |
| CGI 1850 | 1:1 (wgt) blend of 1-hydroxycyclohexyl phenyl ketone and bis(2,6-dimethoxybenzoyl)-2,4-4-trimethylpentyl phosphine oxide |
| PBS | phosphate buffered saline solution |
| PVP | poly(N-vinyl pyrrolidone) (K values noted) |
| Blue HEMA | the reaction product of Reactive Blue 4 and HEMA, as described in Example 4 of U.S. Pat. no. 5,944,853 |
| IPA | isopropyl alcohol |
| D3O | 3,7-dimethyl-3-octanol |
| HO-mPDMS | mono-(3-methacryloxy-2-hydroxypropyloxy)propyl terminated, mono-butyl terminated polydimethylsiloxane |
| EGDMA | ethyleneglycol dimethacrylate |
| TEGDMA | tetraethylene glycol dimethacrylate |
| TPME | tripropylene glycol methylether |
| TLF | tear like fluid, made according to the procedure, below |
| CGI 819 | bis(2,4,6-trimethylbenzoyl)-phenylphosphineoxide |
| BHT | butylated hydroxytoluene |
| MEHQ | hydroquinone monomethyl ether |

Albumin Stock Solution: 1 mg/ml albumin solution diluted 1/20 in PBS to provide a 50 ug/ml albumin stock solution.

Tear-like fluid (TLF) buffer solution:

Tear-like fluid buffer solution (TLF Buffer) was prepared by adding the 0.137 g sodium bicarbonate (*Sigma, S8875*) and 0.01 g D-glucose (*Sigma, G5400)* to PBS containing calcium and magnesium (*Sigma, D8662*)*.* The TLF buffer was stirred at room temperature until the components were completely dissolved (approximately 5 min).

A lipid stock solution was prepared by mixing the following lipids in TLF Buffer, with thorough stirring, for about 1 hour at about 60°C, until clear:

| | |
|---|---|
| Cholesteryl linoleate *(*Sigma, C0289*)* | 24 mg/mL |
| Linalyl acetate *(*Sigma, L2807*)* | 20 mg/mL |
| Triolein *(*Sigma, 7140*)* | 16 mg/mL |
| Oleic acid propyl ester *(*Sigma, O9625*)* | 12 mg/mL |
| undecylenic acid *(*Sigma, U8502*)* | 3 mg/mL |
| Cholesterol *(*Sigma, C8667*)* | 1.6 mg/mL |

The lipid stock solution (0.1 mL) was mixed with 0.015g mucin (mucins from Bovine submaxillary glands *(Sigma, M3895, Type 1-S)).* Three 1 mL portions of TLF Buffer were added to the lipid mucin mixture. The solution was stirred until all components were in solution (about 1 hour). TLF Buffer was added Q.S. to 100mL and mixed thoroughly.

The following components were added one at a time, and in the order listed, to the 100 mL of lipid-mucin mixture prepared above. Total addition time was about 1 hour.

| | |
|---|---|
| acid glycoprotein from Bovine plasma *(Sigma, G3643)* | 0.05 mg/mL |
| Fetal Bovine serum *(Sigma, F2442)* | 0.1% |
| Gamma Globulins from Bovine plasma *(Sigma, G7516)* | *0.3* mg/mL |
| β lactoglobulin (bovine milk lipocaline) *(Sigma, L3908)* | *1.3* mg/mL |
| Lysozyme from Chicken egg white *(Sigma, L7651)* | 2 mg/mL |
| Lactoferrin from Bovine colostrums *(Sigma, L4765)* | 2 mg/mL |

The resulting solution was allowed to stand overnight at 4°C. The pH was adjusted to 7.4 with 1 N HCl. The solution was filtered and stored at - 20°C prior to use.

Throughout the Examples intensity is measured using an IL 1400A radiometer, using an XRL 140A sensor.

### Comparative Example 1

The reaction components and diluent (t-amyl alcohol) listed in Table 1 were mixed together with stirring or rolling for at least about 3 hours at about 23°C, until all components were dissolved. The reactive components are reported as weight percent of all reactive components and the diluent is weight percent of final reaction mixture. The mPDMS used was subsequently analyzed for BHT and found to contain about 10,000 ppm BHT. The DMA and SiGMA used were subsequently analyzed for MeHQ and found to contain about 400 ppm and 100 ppm MeHQ, respectively. Under nitrogen, the reaction mixture was placed into thermoplastic contact lens molds (front and back curves made from Zeonor® 1060R obtained from Zeon, Corp.) and irradiated using TLDK 30W/03 lamps and the following conditions: 3 mW/cm² for about 30 seconds at about 60°C (less than 3% O₂) and about 5 mW/cm² for about 4 minutes at about 70°C (less than 3% O₂), The molds were exposed for 3 seconds to heat from an IR heater (Surfaceigniter, LLC, model RC-052) equipped with a nozzle geometry which focuses the heat onto the back curve, set to a temperature of 800°C and opened using pry fingers. Lenses were released, extracted and hydrated as follows: in 100% DI water, for about 15 minutes at ambient temperature, in 70:30 IPA:DI water for about 15 minutes at 25 °C and in 100% DI water at ambient temperature for 15 minutes.

The lenses were packaged in borate buffered saline solution in glass vials and sterilized for 20 minutes at 121°C.

### Comparative Example 2

The reaction components and diluent (t-amyl alcohol) listed in Table 1 were mixed together with stirring or rolling for at least about 3 hours at about 23°C, until all components were dissolved. The reactive components are reported as weight percent of all reactive components and the diluent is weight percent of final reaction mixture. The mPDMS used was subsequently analyzed for BHT and found to contain about 10,000 ppm BHT. The DMA and SiGMA used were subsequently analyzed for MeHQ and found to contain about 400 ppm and 100 ppm MeHQ, respectively. Under nitrogen, the reaction mixture was placed into thermoplastic contact lens molds (frontcurves made from Zeonor® 1060R obtained from Zeon, Corp. and back curves made from 55:45 Zeonor® 1060R:polypropylene blend) and irradiated using TLDK 30W/03 lamps and the following conditions: 1.5 mW/cm² for about 30 seconds at about 50°C (less than 1 % O₂) and about 5 mW/cm² for about 4.5 minutes at about 70°C (less than 3% O₂). The molds were exposed for 3 seconds to heat from an IR heater (Surfaceigniter, LLC, model RC-052) equipped with a nozzle geometry which focuses the heat onto the back curve, set to a temperature of 800°C and opened using pry fingers. Lenses were released, extracted and hydrated in DI water under the following conditions: about 6 minutes at 10°C, about 6 minutes at 90°C and about 6 minutes at 45 °C.

The lenses were packaged in borate buffered saline solution in glass vials and sterilized for 20 minutes at 121°C.

**Table 1**

| Components: | Wt% |
|---|---|
| SiGMA | 30 |
| mPDMS 1000 | 22 |
| DMA | 31 |
| HEMA | 8.5 |
| EGDMA | 0.75 |
| Norbloc | 1.5 |
| Blue HEMA | 0.02 |
| PVP K90 | 6 |
| CGI 819 | 0.23 |
| Total Monomer | 60% |
| PVP K12 | 11 |
| t-Amyl Alcohol | 29 |
| Total Diluent | 40% |

The lenses made in Comparative Examples 1-2 were evaluated for protein uptake using Method 1.

### Method 1: Daily Incubation Method

The lenses (six replicates of each lens tested) were blotted to remove packing solution and aseptically transferred, using sterile forceps, into 24 Well Cell Culture Cluster (one lens per well). Each well contained 0.3 ml of TLF.

The lenses were incubated in the TLF at 35°C with rotative agitation for 5 hours per day. After each incubation period in TLF, lenses were removed from the 24 well cell culture cluster and soaked overnight in Complete Moisture Plus multipurpose solution. The procedure was repeated every day for the time intervals listed in the Examples. At the end of the incubation period, protein uptake was measured after rinsing the test lenses three times in three separate vials containing phosphate buffered saline solution.

Protein uptake was carried out using a bicinchroninic acid method (QQP-BCA kit, Sigma) following the description provided by the manufacturer. A standard curve is prepared using the albumin solution provided with the QP-BCA kit.

24 wells plates are labeled and the albumin standards are prepared by adding the Albumin Stock Solution to PBS, as indicated in Table 2 below:

**Table 2**

| Tube # | PBS (ul) | Albumin Stock Soln (ul) | Final Conc (ug/ml) |
|---|---|---|---|
| 1 | 1000 | 0 | 0 |
| 2 | 990 | 10 | 0.5 |
| 3 | 900 | 100 | 5 |
| 4 | 800 | 200 | 10 |
| 5 | 600 | 400 | 20 |
| 6 | 400 | 600 | 30 |

QP-BCA reagent is prepared fresh by mixing 25 parts of QA reagent with 25 parts of QB reagent and 1 part of QC reagent (Copper(II) sulfate), as indicated in the Sigma QP-BCA kit instruction. Enough reagent is prepared to provide for all control and test lens samples as well as standard samples, whereby an equal volume of QP-BCA reagent is required for each volume of PBS in the sample / standard.

An equal volume of QP-BCA reagent is added to each sample (1 ml for lenses placed in 1 ml PBS).

Standard, lens, and solution samples are incubated at 60°C for 1 hour, and samples allowed to cool for 5 to 10 minutes. Absorbance of the solution is measured at 562 nm using a spectrophotometer.

### Method 2: Continuous incubation method

The lenses (six replicates of each test lens) were blotted to remove packing solution and aseptically transferred, using sterile forceps, into 24 Well Cell Culture Cluster (one lens per well). Each well contained 1 ml of TLF.

The lenses were incubated in 1 ml of TLF at 35°C with rotative agitation for the time intervals listed in the Examples. The TLF solution was changed every 24 hours. At the end of the incubation period, protein uptake was measured after rinsing the test lenses three times in three separate vials containing phosphate buffered saline solution. Protein uptake measurement was carried out using bicinchoninic acid method following the same procedure as described above

### Examples 1 -16

The reaction components and diluent (t-amyl alcohol) listed in Table 1, and BHT and MEHQ (in the total concentrations listed in Table 4) were mixed together with stirring or rolling for at least about 3 hours at about 23°C, until all components were dissolved. The reactive components are reported as weight percent of all reactive components and the diluent is weight percent of final reaction mixture. BHT was stripped from the mPDMS (to a concentration of about 13 ppm BHT) prior adding to the reaction mixture. The concentrations of BHT and MeHQ shown are total concentrations present, including both any inhibitor included in the other components, such as mPDMS, SiGMA and DMA, and the BHT and MeHQ added.

Prior to filling, the molds were exposed to an open air environment for the time shown in Table 4. In an open environment (air), the reaction mixture was placed into thermoplastic contact lens molds having the base curve compositions shown in Table 4 (where the % is the % Zeonor^{®} 1060R in the Zeonor:polypropylene blend), and back curves made from 55:45 Zeonor^{®} 1060R:polypropylene blend). The filled molds were irradiated using TLDK 30W/03 lamps and the following conditions: 2 mW/cm² for about 25 seconds at about 60°C and about 4 mW/cm² for about 5 minutes at about 80°C (less than 3% O₂). The molds were exposed for 3 seconds to heat from an IR heater (Surfaceigniter, LLC, model RC-052), set to a temperature of 800°C and opened using pry fingers. Lenses were released, extracted and hydrated in DI water under the following conditions: about 6 minutes at 5°C, about 6 minutes at 90°C and about 6 minutes at 45°C.

The lenses were packaged in borate buffered saline solution in glass vials and sterilized for 20 minutes at 121°C.

Protein Uptake was measured using Method 1 as described in Comparative Example 1 for days 3, 6 and 10, and the results are shown in Table 4.

**Table 4**

| Ex# | [BHT] ppm | [MeHQ] ppm | Mold O₂ (sec) | BC (%) | Dwell time (sec) | Protein Uptake (µg/lens) | | |
|---|---|---|---|---|---|---|---|---|
| | | | | | | 3 days | 6 days | 10 days |
| 1 | 13 | 400 | 20 | 55 | 120 | 16±0.4 | 15±0.3 | 14±0.2 |
| 2 | 13 | 400 | 20 | 100 | 20 | 16±0.3 | 15±0.4 | 15±0.4 |
| 3 | 13 | 400 | 300 | 55 | 20 | 14±0.4 | 14±1 | 14±1 |
| 4 | 13 | 400 | 300 | 100 | 120 | 14±0.4 | 14±0.9 | 14±0.9 |
| 5 | 13 | 800 | 300 | 100 | 20 | 11±1 | 12±1 | 11±0.8 |
| 6 | 13 | 800 | 20 | 100 | 120 | 13±0.2 | 13±0.2 | 13±0.2 |
| 7 | 13 | 800 | 300 | 55 | 120 | 10±0.5 | 11±0.8 | 11±0.7 |
| 8 | 13 | 800 | 20 | 55 | 20 | 13±0.2 | 13±1 | 13±0.6 |
| 9 | 200 | 400 | 300 | 100 | 20 | 13±0.9 | 13±0.8 | 13±0.8 |
| 10 | 200 | 400 | 20 | 55 | 20 | 14±0.4 | 15±0.4 | 14±0.8 |
| 11 | 200 | 400 | 300 | 55 | 120 | 12±0.6 | 11±0.6 | 12±0.7 |
| 12 | 200 | 400 | 20 | 100 | 120 | 14±0.6 | 14±0.7 | 14±0.2 |
| 13 | 200 | 800 | 300 | 100 | 120 | 10±1 | 9±1.9 | 8±1.7 |
| 14 | 200 | 800 | 20 | 55 | 120 | 11±0.8 | 11±0.8 | 10±0.4 |
| 15 | 200 | 800 | 20 | 100 | 20 | 11±0.8 | 11±0.5 | 11±0.8 |
| 16 | 200 | 800 | 300 | 55 | 20 | 9±0.7 | 9±0.9 | 9±0.8 |

From Table 4 it can be seen that increasing the concentration of any of BHT, MeHQ or mold exposure to oxygen decreases protein uptake. Examples with the highest total concentration of inhibitors (Examples 16 and 13) showed the lowest protein deposition. Table 4 also shows that the composition of the mold (BC% - % Zeonor in base curve) and dwell time of the reaction mixture in the mold prior to cure, do not impact protein uptake.

### Examples 17- 25

Comparative Example 1 was repeated, with the following changes: the mPDMS was stripped prior adding to the reaction mixture to a BHT concentration of about 100 ppm, additional inhibitor was added to the reaction mixture, the molds were exposed to oxygen for either 240 or 20 seconds of O₂. both as listed in Table 5, below and the lenses were hydrated in DI water using the following conditions: about 7 minutes at about 22°C, about 7 minutes at about 90°C and about 7 minutes at 28°C. The concentrations of BHT and MeHQ shown are total concentrations present, including both any inhibitor included in the other components, such as mPDMS, SiGMA and DMA, and the BHT and MeHQ added directly to the reaction mixture.

The lenses were evaluated for protein uptake after 8 days of daily incubation (Method 1) and after 5 days of continuous incubation (Method 2). The lenses were also evaluated for protein uptake as described above. The results are shown in Table 5, below.

**Table 5**

| Ex # | [BHT] (ppm) | [MeHQ] (ppm) | [inhibitor] (ppm) | O2 (sec) | PU 8 days (µg/lens) | PU 5 days (µg/lens) |
|---|---|---|---|---|---|---|
| 18 | 200 | 600 | 800 | 240 | 9.4±0.2 | 9.6±0.3 |
| 19 | 400 | 600 | 1000 | 240 | 8.8±0.2 | 8.8±0.3 |
| 20 | 600 | 600 | 1200 | 240 | 8±0.5 | 8.5±0.03 |
| 21 | 200 | 1100 | 1300 | 240 | 6.9±0.1 | 7.2±0.1 |
| 22 | 400 | 1100 | 1500 | 240 | 6.5±0.2 | 6.7±0.1 |
| 23 | 600 | 1100 | 1700 | 240 | 6±0.2 | 6.1±0.1 |
| 24 | 200 | 1600 | 1800 | 240 | 5.6±0.4 | 5.7±0.4 |
| 25 | 400 | 1600 | 2000 | 240 | 5.7±0.2 | 5.7±0.3 |
| 26 | 600 | 1600 | 2200 | 240 | 5.8±0.5 | 5.9±0.3 |
| 27 | 200 | 600 | 800 | 240 | 9.2±0.5 | 9.3±0.6 |
| 28 | 200 | 600 | 800 | 20 | 10.6±0.05 | 10.8±0.4 |
| 29 | 400 | 1600 | 2000 | 20 | 7.6±0.1 | 7.4±0.2 |

There are no statistical difference between the protein uptake data taken at 8 days (with overnight cleaning) and 5 days of continuous incubation. Lenses with increased MeHQ levels and BHT levels displayed reduced total protein uptake. For low levels of MeHQ (600-ppm), increasing BHT had a larger effect of reducing protein uptake than for high levels of MeHQ (1600-ppm). Increasing the total inhibitor level beyond ~1700-ppm did not have any significant effect on the total protein uptake.

### Examples 26-29

The reaction components and diluent (t-amyl alcohol) listed in Table 1, and additional MEHQ (in the amounts listed in Table 6) were mixed together with stirring or rolling for at least about 3 hours at about 23°C, until all components were dissolved, except in these examples, prior to adding to the reaction mixture, the following components were stripped to the respective inhibitor concentrations:
mPDMS was stripped to a [BHT] of about 100 ppm;

SiGMA was stripped to [MeHQ] of about 100 ppm. The DMA used had a [MeHQ] of 400 ppm. Thus, the base level of inhibitor in the formulation was 500 ppm. The reactive components are reported as weight percent of all reactive components and the diluent is weight percent of final reaction mixture. Prior to filling, the molds were exposed to oxygen for 3 minutes at ambient temperature and a %O₂ shown in Table 6. The reaction mixture was placed, under N₂, into thermoplastic contact lens molds (Zeonor^{®} 1060R front curves and back curves made from 55:45 Zeonor^{®} 1060R:polypropylene blend). The filled molds were irradiated using TLDK 30W/03 lamps and the following conditions: 1.5 mW/cm² for about 30 seconds at about 50°C and less than about 0.5% O₂ and about 5 mW/cm² for about 4.5 minutes at about 70°C (less than 3% O₂). The molds were exposed for 3 seconds to heat from an IR heater (Surfaceigniter, LLC, model RC-052), set to a temperature of 800°C and opened using pry fingers. Lenses were released, extracted and hydrated in DI water under the following conditions: about 7 minutes at 25°C, about 7 minutes at 90°C and about 7 minutes at 20°C.

The lenses were packaged in borate buffered saline solution in glass vials and sterilized for 20 minutes at 121°C.

Protein Uptake was measured after 6 days as described in Comparative Example 1 (Method 1), and the results are shown in Table 6.

**Table 6**

| Ex. # | Added [MeHQ] ppm | Total [inhib] ppm | %O₂ | Cure intensity MW/cm² | Mean PU ug/lens | SD * |
|---|---|---|---|---|---|---|
| 26 | 150 | 650 | 21 | 5 | 24 | 1.7 |
| 27 | 150 | 650 | 10 | 5 | 29 | 4.7 |
| 28 | 350 | 850 | 21 | 5 | 13 | 0.5 |
| 29 | 350 | 850 | 10 | 5 | 17 | 2. |

| | | | | | | |
|---|---|---|---|---|---|---|
| PU=protein uptake *SD= standard deviation, protein uptake (ug/lens) | | | | | | |

The results in Table 6 clearly show that increasing the percent oxygen to which the molds are exposed prior to filling decreases the protein uptake of the resulting lenses (Example 26 shows a 5 ug/lens reduction compared to Example 27, and Example 28 shows a 4 ug/lens reduction compared to Examples 29). Over 40% reductions were achieved by increasing the concentration of MeHQ from 150 ppm to 350 ppm, as seen by comparing Example 26 to Example 28 and Example 27 to 29.

### Examples 30-33

Examples 26-29 were repeated, except that the cure intensity in the second zone was decreased to 0.5 mW/cm². The results are shown in Table 7, below.

### Examples 34-35

Examples 30 and 32 were repeated, except that the hydration conditions were as follow, 30 minutes in 100% DI, 30 minutes in 70% IPA 30 minutes in 100% DI as shown in Table 7, all at ambient temperature. The results are shown in Table 7, below.

**Table 7**

| Ex# | Hydration | [MeHQ] ppm | Total [inhib] ppm | %O₂ | Intensity MW/cm² | Mean PU ug/lens | SD* |
|---|---|---|---|---|---|---|---|
| 30 | AQ | 150 | 650 | 21 | 0.5 | 24 | 1.3 |
| 31 | AQ | 150 | 650 | 10 | 0.5 | 26 | 5.2 |
| 32 | AQ | 350 | 850 | 21 | 0.5 | 15 | 0.4 |
| 33 | AQ | 350 | 850 | 10 | 0.5 | 18 | 3.6 |
| 34 | IPA | 150 | 650 | 21 | 0.5 | 17 | 2 |
| 35 | IPA | 350 | 850 | 21 | 0.5 | 13 | 1.6 |

| | | | | | | | |
|---|---|---|---|---|---|---|---|
| PU=protein uptake *SD= standard deviation, protein uptake (ug/lens) | | | | | | | |

### Examples 36-39

Contact lenses were made as in Comparative Example 2 except that the mPDMS was stripped prior adding to the reaction mixture to a BHT concentration of about 13 ppm and the SiGMA and DMA were stripped such that the combined concentration of MeHQ in both was 16 ppm. In Examples 38-39 additional BHT and MeHQ was added to yield the total BHT and MeHQ concentrations noted in Table 8. The molds were exposed to 5% O₂ for 180 seconds prior to filling and the lenses were cured, demolded and extracted with DI water and demolded as disclosed in Example 2. The lenses were inspected after demolding and the yield of acceptable lenses (free from tears and edge chips) is noted in Table 8.

**Table 8**

| Ex # | [BHT] ppm | [MeHQ] ppm | Visual yield (% good) |
|---|---|---|---|
| 36 | 13 | 16 | 2 |
| 37 | 13 | 16 | 2 |
| 38 | 158 | 93 | 20 |
| 39 | 158 | 90 | 19 |

### Examples 40-44

Contact lenses were made as in Comparative Example 2 (monomers were used without stripping and with the inhibitor present from the manufacturer) except that
- the molds were exposed for 3 minutes to oxygen in the percentages listed in Table 9, below;
- the lenses were subjected to a cooling process from a blast of pressurized air (<10°C) (Joule Thomson Effect) using Vortex Tube nozzles (made by ExAir) with Aeroflex sleeve foam insulation prior to exposure to the IR heater; and

the lenses were extracted using the following conditions 100% DI water, for about 30 minutes at ambient temperature, in 70:30 IPA:DI for about 30 minutes at ambient temperature and in packing solution with about 50 ppm methyl cellulose at ambient temperature for 120 minutes. The lenses were manually inspected after demolding on a 10X highlighter in packing solution/MC 50ppm solution and the yield of acceptable lenses (free from tears and edge chips) is noted in Table 9.

**Table 9**

| Ex# | %O₂ ppm | Visual yield (% good) |
|---|---|---|
| 40 | 5 | 44 |
| 41 | 7.5 | 66 |
| 42 | 10 | 71 |
| 43 | 12.5 | 63 |
| 44 | 15 | 73 |

### Examples 45-53

The reaction components (55 weight %) and diluent (45 weight% based upon the weight percent of diluent and final reaction mixture) listed in Table 10 were mixed together with stirring or rolling for at least about 3 hours at about 23°C, until all components were dissolved. The reactive components are reported as weight percent of all reactive components. Examples 45, 48 and 51 shows the amounts of MeHQ and BHT present in the monomer mix without any additional inhibitor added. Additional BHT and MeHQ were added to Examples 46-47, 49-50 and 52-53 to yield the total BHT and MeHQ concentrations noted in Table 10. Under nitrogen, the reaction mixture was placed into thermoplastic contact lens molds (front and back curves made from Zeonor® 1060R obtained from Zeon, Corp.) which had been exposed to O₂ overnight at the concentration listed in Table 11 and irradiated using TLDK 30W/03 lamps and the following conditions: 1.8 mW/cm² for about 25 minutes at about 65°C and the oxygen levels listed in Table 11.

The lens were demolded by hand and released in 100% DI at about 90°C for about 20 to 30 minutes. The lenses were transferred to jars of packing solution and placed on jar roller at ambient temperature. After 30 minutes the packing solution was changed out and the jars were put back on the roller for an additional 30 minutes. The lenses were transferred to vials with packing solution and sterilized for 20 minutes at 121°C.

Protein uptake was measured after 7 days as described in Comparative Example 1, and the results are shown in Table 11.

**Table 10**

| | Ex 45- | Ex 51- |
|---|---|---|
| Component | 50 (%) | 53 (%) |
| Norbloc | 2.2 | 2.2 |
| Irqacure 819 | 0.25 | 0.25 |
| HEMA | 8 | 8 |
| DMA | 19.53 | 19.53 |
| OH-mPDMS | 55 | 55 |
| TEGDMA | 3 | 3 |
| Blue Hema | 0.02 | 0.02 |
| PVP K90 | 12 | 12 |
| | | |
| TPME | 100% | 55% |
| Decanoic acid | 0% | 45% |

**Table 11**

| Ex# | %O2 | [BHT] ppm | [MEHQ] ppm | Mean PU - 3 days (ug/lens) | Mean PU - 7 days (ug/lens) |
|---|---|---|---|---|---|
| 45 | <1 | 75 | 80 | 17±0.2 | 17+0.5 |
| 46 | <1 | 300 | 1600 | 13±0.8 | 13+0.8 |
| 47 | <1 | 1000 | 1600 | 12±0.6 | 13+0.4 |
| 48 | 3 | 75 | 80 | 16±0.5 | 16+0.6 |
| 49 | 3 | 300 | 1600 | 13±0.2 | 13+0.4 |
| 50 | 3 | 1000 | 1600 | 12±0.2 | 12+0.1 |
| 51 | <1 | 75 | 80 | 11±2.5 | 11±1.2 |
| 52 | <1 | 300 | 1600 | 7±0.5 | 8±0.3 |
| 53 | <1 | 1000 | 1600 | 6±0.3 | 6±0.6 |

## Claims

1. A process comprising:
curing a silicone hydrogel reaction mixture comprising from about 600 ppm to about 20,000 ppm, of at least one protein uptake reducing compound based upon all components of the reaction mixture to form a contact lens,
contacting said contact lens with an aqueous solution substantially free of volatile organic solvents to reduce impurity concentrations in said contact lens below an ocular discomfort causing level.

2. The process of claim 1 wherein said protein uptake reducing compound is selected from the group consisting of inhibitors, chain transfer agents, radical scavengers, controlled free radical initiators and mixtures thereof.

3. The process of claim 2 wherein said protein uptake reducing compound comprises at least one inhibitor.

4. The process of claim 3 wherein said at least one inhibitor is selected from the group consisting of quinones, substituted phenols, aryl amines, nitro compounds, oxygen and mixtures thereof; or wherein said at least one inhibitor is selected from the group consisting of butylated hydroxytoluene, hydroquinone monomethyl ether, O₂, vitamin E, nitric oxide/nitrogen dioxide mixtures and mixtures thereof; or wherein said protein uptake reducing compound comprises at least one inhibitor selected from the group consisting of butylated hydroxytoluene, hydroquinone monomethyl ether, O₂, and mixtures thereof.

5. The process of any preceding claim wherein said contact lens is uncoated.

6. The process of claim 1 wherein said at least one protein reducing compound is present in said reaction mixture in an amount between about 800 ppm and about 1 weight% based upon the reaction mixture; or wherein said at least one protein reducing compound is present in said reaction mixture in amounts between about 1500 ppm and about 5000 ppm based upon the reaction mixture.

7. The process of claims 1 wherein said process further comprising exposing said mold to oxygen prior to charging said reaction mixture to said mold; wherein preferably said mold is exposed to oxygen levels of up to about 20% O₂, for exposure times of at least about 1 minute.

8. The process of claim 1 wherein said aqueous solution comprises at least about 50 weight% water; or at least about 70 weight% water.

9. The process of claim wherein 1 wherein said silicone hydrogel contact lens displays a reduction in uptake of at least about 10%, or at least about 20%, of at least one protein from a tear like fluid compared to a lens with less than said effective amount of at least one protein uptake reducing compound.

10. The process of claim 9 wherein said at least one protein comprises at least one denatured protein.

11. The process of claim 9 wherein said at least one protein comprises at least one protein other than lactoferrin and lysozyme.

12. The process of claim 9 wherein uptake of all proteins is reduced at least about 10%.

13. The process of claim 1 wherein said contact lens displays a total protein uptake of less than about 15 µg/lens; or wherein said contact lens displays a total protein uptake of less than about 10 µg/lens.

14. A process according to claim 1 wherein the aqueous solution comprises less than 10 weight%, or less than 5 weight%, organic solvents.
